# DEMANDE DE BREVET EUROPEEN

(11) **EP 0 934 901 A1**
(43) Date de publication de la demande: **11.08.1999**
(21) Numéro de dépôt: 99101942.3
(22) Date de dépôt: 30.01.1999
(51) Int. Cl.: B66C 1/00, B65G 47/90

(54) **Dispositif et procédé pour le déplacement de barres**

(30) Priorité: 04.02.1998 IT VI980019
(71) Demandeur: Trento, Bruno, 30031 Dolo (VE) (IT)
(72) Inventeur: Trento, Bruno, 30031 Dolo (VE) (IT)
(74) Mandataire: Bettello, Luigi, Dott. Ing.

(57) **Abrégé**

Le dispositif pour le déplacement de barres selon l'invention est caractérisé par le fait que la barre (1) à déplacer, qui peut être en une matière aussi bien magnétique qu'amagnétique, éventuellement posée sur un banc (2), est ancrée audit dispositif (3) de soulèvement et de transport au moyen d'une ou plusieurs têtes de soudo-brasage(5) venant se placer en contact avec ladite barre, de préférence au droit des deux surfaces latérales (6) de celle-ci.

## Description

La présente invention concerne un dispositif et un procédé pour le déplacement de barres selon le préambule de la revendication 1.

L'invention vise en particulier, mais non exclusivement, le déplacement de barres en matière amagnétique.

Ainsi qu'il est connu, le déplacement de barres lourdes, dans les magasins de distribution, comporte toujours un grand danger dans les manoeuvres d'arrimage et de déchargement desdites barres dans les équipements appropriés.

Dans l'état actuel de la technique, le déplacement de barres, par exemple depuis des équipements de dépôt situés dans le magasin jusqu'à une ligne de coupe, est simplifié s'il s'agit du transport de barres en matière magnétique parce qu'on utilise des électro-aimants tandis qu'il reste encore d'une difficulté notable pour le transport de barres en matière amagnétique puisque, dans ce cas, on doit soulever ou dégager manuellement la barre du reste du paquet avant de pouvoir l'accrocher à des pinces mobiles de prise appropriées.

Le danger qui concerne le personnel préposé à ces opérations est d'autant plus grand que la hauteur au niveau de laquelle les barres en magasin sont arrimées est importante et, surtout d'autant plus grand que le poids de ces barres est élevé.

L'invention a pour but de rationaliser l'opération de déplacement de barres en matière amagnétique, en la rendant moins dangereuse et en réduisant au minimum la possibilité d'accidents pour le personnel préposé.

Ce but est atteint conformément aux caractéristiques de la partie caractérisante de la revendication 1.

L'invention a également pour objet un procédé pour le déplacement de barres, conforme à la revendication 6.

La caractéristique essentielle qui distingue le dispositif selon l'invention concerne le moyen d'ancrage entre l'équipement de déplacement et la barre, éventuellement en matière amagnétique qu'il s'agit de déplacer. Il est ainsi prévu une opération de soudo-brasage à exécuter sur les deux surfaces latérales de la barre elle-même de manière à obtenir le collage barre/tête de soudo-brasage.

Sous l'aspect de la construction, le dispositif selon l'invention est essentiellement composé d'une traverse, reliée par exemple à un pont-roulant et munie de bras télescopiques à l'extrémité desquels se trouve une tête de soudo-brasage.

En fonctionnement, la traverse est positionnée au-dessus de, et parallèlement à, la barre à déplacer et ensuite, les deux bras télescopiques sont réglés de manière à donner à la traverse la même longueur que la barre sous-jacente.

Toujours ensuite, l'opérateur s'occupe de placer les deux têtes de soudo-brasage contre les surfaces latérales correspondantes de la barre et de réaliser le collage de façon automatique.

Lorsque l'ancrage de la barre est assuré, cette barre est ensuite soulevée du reste du paquet, qui reste déposé dans le banc, sous l'action de la traverse reliée au pont-roulant et, immédiatement après un premier soulèvement minime, la barre est accrochée aussi par les deux pinces mécaniques présentes sur ladite traverse, qui concourent à assurer le soutien de la barre pendant le déplacement ainsi qu'à faciliter et régler le dépôt de la barre dans la nouvelle position, laquelle peut être, par exemple, une ligne de coupe ou un autre banc.

Lorsque la barre est de nouveau positionnée automatiquement, on procède à séparer les deux têtes de soudo-brasage des extrémités de la barre elle-même par une opération de chauffage de la zone de soudure.

Cette invention est aussi avantageusement utilisée pour le déplacement de barres en matière magnétique.

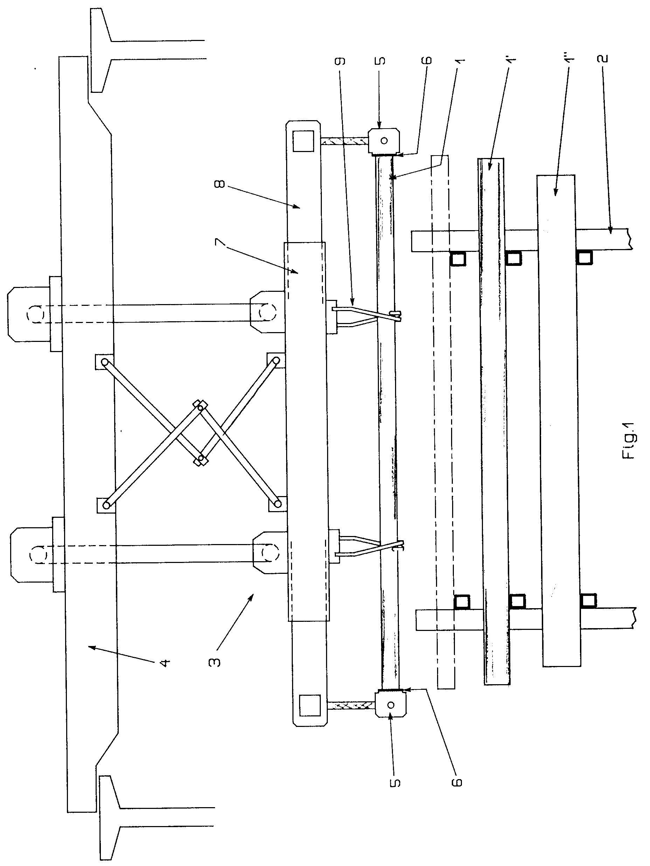

L'invention sera décrite de façon plus détaillée ci-après, à l'aide de la figure 1 annexée, qui représente une vue schématique de l'ensemble du groupe de soulèvement muni du dispositif selon l'invention.

Comme on peut le voir sur la Fig. 1, la barre 1 en matière amagnétique, de section ronde, carrée ou plate, disposée avec d'autres barres 1', 1'' placées sur le banc 2, est prélevée par le dispositif de soulèvement et de transport 3 selon l'invention, accroché, par exemple, à une poutre 4 d'une grue à pont-roulant.

L'ancrage entre le dispositif de soulèvement 3 et la barre 1 s'effectue au moyen des deux têtes de soudo-brasage 5 dont ledit dispositif est muni et qui viennent se placer contre les surfaces de tête 6 de ladite barre.

La tête de soudo-brasage 5 est avantageusement capable de régler l'étendue de la zone de collage en fonction des dimensions de la surface de contact 6 avec la barre.

Au contraire, pour régler la position des têtes de soudo-brasage 5 sur une longueur différente des barres 1 à prélever, le dispositif se compose d'une traverse centrale 7 munie de deux bras télescopiques 8 qui supportent lesdites têtes.

Sur la traverse centrale 7, se trouvent aussi des pinces 9 qui accrochent mécaniquement la barre 1 aussitôt après que celle-ci a été soulevée au-dessus du banc et la maintiennent accrochée pour toute l'opération de transport et de dépôt dans la nouvelle station.

## Revendications

1. Dispositif pour le déplacement de barres, en matière magnétique ou amagnétique, caractérisé en ce qu'il comprend une ou plusieurs têtes de soudo-brasage (5) permettant l'ancrage de la barre (1), éventuellement posée sur un banc (2), audit dispositif (3) de soulèvement et de transport, la ou chaque tête de soudo-brasage (5) étant destinée à venir en contact avec ladite barre, de préférence au droit des deux surfaces latérales (6) de celle-ci.

2. Dispositif pour le déplacement de barres selon la revendication 1, caractérisé par le fait qu'il comprend une traverse (7) munie d'au moins un bras télescopique (8) qui supporte au moins une tête de soudo-brasage (5).

3. Dispositif pour le déplacement de barres selon les revendications 1 et 2, caractérisé en ce que la traverse (7) est munie d'au moins une pince (9) d'accrochage de la barre (1) pendant son déplacement.

4. Dispositif pour le déplacement de barres selon une ou plusieurs des revendications précédentes, caractérisé en ce que la traverse (7) est placée au-dessus de la barre et est soutenue par une poutre (4).

5. Dispositif pour le déplacement de barres selon une ou plusieurs des revendications précédentes, caractérisé par le fait que la ou chaque tête de soudo-brasage (5) est apte à régler l'étendue de la zone de collage en fonction de la dimension de la surface de contact (6) entre la ou chaque tête (5) et la barre (1).

6. Procédé pour le déplacement de barres, utilisant le dispositif décrit dans une ou plusieurs des revendications précédentes, caractérisé par le fait qu'il comprend les phases suivantes :
- positionnement de la traverse (7) au-dessus de la barre (1) à prélever;
- réglage de l'extension des bras télescopiques (8) en fonction de la longueur de la barre (1) à prélever;
- positionnement des têtes de soudo-brasage (5) en contact avec les surfaces latérales (6) de la barre (1) à soulever;
- exécution du soudo-brasage;
- soulèvement de la barre (1), avec les deux têtes de soudo-brasage (5) ancrées;
- accrochage de la barre (1) avec les pinces mobiles (9);
- déplacement et dépôt de la barre;
- décrochage des pinces mobiles (9);
- séparation des têtes de soudo-brasage (5) par rapport aux surfaces latérales (6).
